# EUROPÄISCHE PATENTSCHRIFT

(11) **EP 1 711 307 B1**
(45) Veröffentlichungstag und Bekanntmachung des Hinweises auf die Patenterteilung: **20.02.2008**
(21) Anmeldenummer: 04804806.0
(22) Anmeldetag: 14.12.2004
(51) Int. Cl.: B23Q 11/00, B23D 59/00, B27B 9/00

(54) **SYSTEM AUS EINEM SPANAUFFANGBEHÄLTER UND EINER SCHUTZHAUBE FÜR EINE WERKZEUGMASCHINE**
SYSTEM COMPRISING A CHIP COLLECTOR AND A PROTECTIVE HOOD FOR A MACHINE TOOL
SYSTEME COMPRENANT UN COLLECTEUR DE COPEAUX ET UN CAPOT PROTECTEUR POUR UNE MACHINE-OUTIL

(30) Priorität: 27.01.2004 DE 102004004003
(43) Veröffentlichungstag der Anmeldung: 18.10.2006
(73) Patentinhaber: ROBERT BOSCH GMBH, 70442 Stuttgart (DE)
(72) Erfinder: ROEHM, Heiko, 70176 Stuttgart (DE); WEBER, Steffen, 70794 Filderstadt (DE)
(74) Vertreter: Daub, Thomas
(86) Internationale Anmeldenummer: PCT/EP2004/053446
(87) Internationale Veröffentlichungsnummer: WO 2005/070617

(56) Entgegenhaltungen:
- EP-A- 0 503 465
- DE-A1- 3 542 263
- GB-A- 523 220
- US-A- 4 675 999
- US-A- 5 675 895

## Beschreibung

### Stand der Technik

Die Erfindung geht aus von einem System aus einem Spanauffangbehälter und einer Schutzhaube für eine Werkzeugmaschine, insbesondere eine handgeführte Werkzeugmaschine, nach dem Oberbegriff des unabhängigen Anspruchs (siehe z.B. US 4 675 999).

Beim Arbeiten mit Handkreissägen und ähnlichen Werkzeugmaschinen wie Hobel, Fräsen und dergleichen fallen große Mengen von Spänen an, die entweder direkt oder indirekt über einen Spanauswurf aus einer Schutzhaube ins Freie gefördert, über einen Absauganschluss abgesaugt oder in einem Spänesack aufgefangen werden. Typischerweise ist ein runder Spanauswurf seitlich an der Schutzhaube vorgesehen, so dass die Späne seitlich neben der Werkzeugmaschine ausgeworfen werden. Teilweise wird ein Bediener durch ausgeworfene Späne oder einen Absaugschlauch behindert. Häufig ist der Spanauswurf so gestaltet, dass der Staubsaugerschlauch oder der Spänesack direkt in den Spanauswurf gesteckt werden kann. Hier können störende Momente des Staubsaugerschlauchs auf das Sägeblatt auftreten.

Weiterhin sind Handkreissägen bekannt, deren runder Spanauswurf parallel zur Schutzhaube nach hinten führt. Wird ohne angeschlossenen Staubsaugerschlauch oder Spänesack gearbeitet, kann der Bediener in den Spanstrom geraten.

Alternativ sind Handkreissägen bekannt, die über eine Spanrutsche die Späne geschwindigkeitsarm neben der Handkreissäge ablegen. Ein Staubsack oder ein Staubsaugerschlauch ist nur über Adapter zu befestigen, wobei die Funktion passiver Spanerfassungslösungen durch die Verlangsamung der Späne behindert ist.

Des Weiteren ist aus der US 4 675 999 eine Handkreissäge mit einer Schutzhaube bekannt, welche einen abnehmbaren Sammelbehälter für Späne besitzt. Der Sammelbehälter ist seitlich an der Schutzhaube angeordnet. Die Späne werden mit einem Luftstrom durch einen Umlenkkanal in den Sammelbehälter befördert. Hierbei kann der Umlenkkanal durch die Späne verstopft werden, wodurch die Spanabfuhr behindert wird.

Es sind zudem Schutzhauben bekannt, in denen Späne aufgefangen werden können. Dabei ist ein verschließbarer Absauganschlussstutzen vorgesehen. Problematisch ist, dass immer mit der Box gearbeitet werden muss, da sie integraler Bestandteil der Schutzhaube ist. Ist die Box gefüllt, muss diese entleert werden, wozu der Arbeitsgang unterbrochen werden muss und die gesamte Handkreissäge zu einem Abfallbehälter getragen werden muss.

Ein Spänesack ist zwar entfernbar, weist jedoch den Nachteil auf, dass das poröse Hüllmaterial einen Luftwiderstand darstellt, so dass nur ein Teil der spandurchsetzten Luft in den Spänesack strömt, während ein erheblicher Teil der Späne durch andere Öffnungen der Schutzhaube nach außen gelangt.

### Vorteile der Erfindung

Die Erfindung geht aus von einem System aus einem Spanauffangbehälter für eine Späne erzeugende Werkzeugmaschine, insbesondere eine handgeführte Werkzeugmaschine, mit einem Zuführbereich zum Zuführen eines ein Luft-Späne-Gemisch enthaltenden Luftstroms und zum lösbaren Verbinden mit einem Spanauswurf sowie mit einem einhüllenden Gehäuse, das zur Befestigung an einer Schutzhaube vorgesehen ist, wobei in dem Gehäuse ein Luftauslass räumlich getrennt von einem Spansammelbereich für Späne vorgesehen ist, und aus einer den Spanauswurf aufweisenden Schutzhaube, wobei die Schutzhaube eine Hüllkontur um ein Werkzeug aufweist und die Späne innerhalb der Schutzhaube in Drehrichtung des Werkzeugs geführt werden.

Es wird vorgeschlagen, dass der Spanauswurf an einem Umfang der Schutzhaube angeordnet ist und eine Öffnung aufweist, durch die Späne im Betrieb ausgeworfen werden, und dass der Spanauffangbehälter ebenfalls am Umfang der Schutzhaube angeordnet ist. Der Spanauffangbehälter leitet die Luft gereinigt ab, während Späne im Spanauffangbehälter zurückbleiben und dort entweder gesammelt und später entsorgt oder gezielt geschwindigkeitsarm neben der Werkzeugmaschine abgelegt werden können. Dies kann auch intervallweise erfolgen, ohne dass die Arbeit unterbrochen werden muss. Zum Entsorgen von im Spanauffangbehälter gesammelten Spänen kann der Spanauffangbehälter auch von der Werkzeugmaschine bzw. deren Schutzhaube entfernt werden und bequem geleert werden.

Ist zwischen dem Luftauslass und dem Spansammelbereich des Spanauffangbehälters als Trennung eine Prallwand vorgesehen, kann ein zugeführtes Luft-Späne-Gemisch leicht in Späne und Luft getrennt werden. Die Luft kann über die Prallwand zum Luftauslass gelangen und abströmen, während die Späne in den Spansammelbereich geleitet und durch mehrfache Umlenkung zwischen Prallwand und Gehäuse abgebremst werden. Auf einen separaten Filter kann verzichtet werden, so dass Kosten und Wartungsarbeiten zum Reinigen oder Austauschen eines Filters entfallen. Der Spanauffangbehälter verwendet das Zyklonprinzip zur Trennung von Luft und Spänen. Beim Zyklon-Prinzip wird die Luft verwirbelt, wobei Späne als schwerere Partikel an eine Innenwand des Gehäuses geschleudert werden und in den Spansammelbereich fallen. Die Luft verlässt gereinigt den Spanauffangbehälter. Späne verbleiben im Wesentlichen im Spanauffangbehälter.

Besonders effektiv kann die Luft von Spänen getrennt werden, wenn zwischen dem Zuführbereich und dem Luftauslass des Spanauffangbehälters Umkehrmittel zur Richtungsumkehr des Luftstroms im Gehäuse vorgesehen sind. Günstigerweise ist der Luftauslass knapp unterhalb des Zuführbereichs angeordnet. Die anfänglich spandurchsetzte Luft muss einen langen geometrischen Weg zurücklegen, bis sie von Spänen befreit aus dem Spanauffangbehälter abströmen kann. Vorzugsweise ist der Luftauslass so angeordnet, dass die abströmende Luft gegenüber der einströmenden Luft seitlich abgelenkt wird.

Das Gehäuse des Spanauffangbehälters ist vorzugsweise im Wesentlichen luftundurchlässig ausgebildet, so dass die Luft entweder durch den Luftauslass oder zusätzlich durch eine Klappe entweichen kann. Der Luftwiderstand des Spanauffangbehälters ist entsprechend gering. Günstig ist ein steifes Gehäuse aus einem Kunststoff oder einem Metall, beispielsweise Blech. Der Spanauffangbehälter kann leicht entleert und gereinigt werden.

Eine günstige und handliche Form des Gehäuses für eine Verwendung des Spanauffangbehälters an einer Schutzhaube einer Werkzeugmaschine mit Spaltkeil kann erreicht werden, wenn sich dieses vom Zuführbereich zum Spansammelbereich verjüngt. Der Spanauffangbehälter lässt sich leicht auf der Werkzeugmaschine bzw. deren Schutzhaube montieren. Der Bediener bleibt in der Handhabung der Werkzeugmaschine ungestört. Der Spanauffangbehälter lässt sich leicht entfernen und handhaben. Das Gehäuse kann jedoch auch andere, dem Fachmann sinnvoll erscheinende Formen aufweisen, die an die jeweilige konkrete Ausgestaltung der Werkzeugmaschine angepasst sind. Dabei ist für eine günstige Geschwindigkeitsminderung der Späne im Spansammelbereich ein möglichst großer Querschnitt vorteilhaft. Dies hat den zusätzlichen Vorteil, dass mehr Stauraum für die gesammelten Späne vorhanden ist als bei sich verjüngendem Gehäuse.

Vorzugsweise ist im Spansammelbereich eine Klappe zum Entleeren der Späne vorgesehen. Der mit Spänen gefüllte Spanauffangbehälter kann von der Werkzeugmaschine bzw. deren Schutzhaube abgenommen und entleert werden. Der Spanauffangbehälter kann auch nachträglich für übliche Schutzhauben nachgerüstet werden, die einen Spanauswurf aufweisen. In diesem Fall befindet sich der Spanauffangbehälter neben der Schutzhaube.

Bevorzugt ist der Spanauffangbehälter in eine Hüllkontur der Schutzhaube integriert. Der Bediener kann die Werkzeugmaschine einfach und bequem handhaben, ohne von dem Spanauffangbehälter gestört zu werden. Der Spanauswurf ist günstigerweise parallel zu einem von der Schutzhaube abgedeckten Sägeblatt, insbesondere an einem Umfang der Schutzhaube, angeordnet. Ein Einfluss von störenden Momenten bei der Handhabung der Handwerkzeugmaschine kann durch die geometrische Anordnung minimiert werden.

Ist der Spanauffangbehälter lösbar mit der Schutzhaube verbunden, kann der Bediener wählen, ob er mit dem Spanauffangbehälter arbeiten möchte oder stattdessen einen Absaugschlauch anschließen möchte. Vorzugsweise weist der Spanauffangbehälter dazu einen mit einem Spanauswurf der Schutzhaube korrespondierenden Zuführbereich auf, der beispielsweise mit einem gleichen Konus wie ein üblicher Absaugschlauchstutzen ausgebildet ist. Ebenso kann die Verbindung als Überwurf oder mit einem Flansch oder in anderer Weise sinnvoll ausgebildet sein. Die Komponenten sind leicht zu wechseln. Die Wahl, ob ein Spanauffangbehälter oder ein Absaugschlauch angeschlossen wird, kann abhängig von aktuellen Arbeitsbedingungen getroffen werden. Bei der Verwendung des Absaugschlauchs ist von Vorteil, dass der Spanauswurf eine für den Arbeitseinsatz mit dem Absaugschlauch optimale Orientierung aufweist und zudem die Schutzhaube durch das Entfernen des Spanauffangbehälters in ihrer Größe reduziert ist. Zudem ist der Spanauswurf, an den der Absaugschlauch angeschlossen wird, nahe an dem Werkzeug, vorzugsweise einem Sägeblatt, angeordnet, so dass von einer Steifigkeit und einer Reibung des Absaugschlauchs resultierenden Kräfte das Arbeitsergebnis nur wenig beeinflussen können.

Weist der Spanauffangbehälter eine Klappe zum Entfernen von Spänen auf, kann mit geöffneter oder geschlossener Klappe gearbeitet werden. Ist eine Verschmutzung der Arbeitsumgebung kein Problem, kann mit dem Spanauffangbehälter und geöffneter Klappe gearbeitet werden. Die Späne werden mit geringst möglicher Beeinträchtigung des Bedieners ins Freie geführt. Die Klappe ist am Spanauffangbehälter vorzugsweise werkstücknah angeordnet, so dass die Späne bequem entfernt aus dem Spanauffangbehälter werden können. Verbessert wird die Ungestörtheit der Arbeitsumgebung durch Arbeiten mit geschlossener Klappe. Der Spanauffangbehälter muss lediglich von Zeit zu Zeit entleert werden. Dazu muss die Bearbeitung nicht unbedingt unterbrochen und der Spanauffangbehälter muss nicht abgenommen werden. Die aufgefangenen Späne können auch durch die kurzzeitig geöffnete Klappe neben der Werkzeugmaschine deponiert werden. Anschließend wird die Klappe wieder geschlossen.

Wird bei geöffneter Klappe Späne geschwindigkeitsarm neben der Werkzeugmaschine abgelegt, können die Späne mit geringst möglicher Beeinträchtigung des Bedieners ins Freie geführt werden. Vorzugsweise dient die Klappe im geöffneten Zustand als Spanrutsche und/oder als Verlängerung einer Spanrutsche. Dadurch wird ein unnötiges Aufwirbeln der abgeführten Späne vermieden.

Die Erfindung ist bei allen Werkzeugmaschinen einsetzbar, bei denen am Arbeitsort Späne bzw. Materialpartikel entstehen, die durch das verwendete Werkzeug mit Geschwindigkeit in eine Schutzhaube bzw. in einen Spanauswurf gefördert werden, wie beispielsweise Kreissägen, Hobel, Oberfräsen, Schleifmaschinen und dergleichen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Seitenansicht einer bevorzugten Handkreissäge ohne Spanauffangbehälter,
- Fig. 2: eine Seitenansicht einer bevorzugten Handkreissäge mit einem Spanauffangbehälter,
- Fig. 3: eine Rückansicht eines Spanauffangbehälters,
- Fig. 4 a, b, c: einen Längsschnitt durch einen Spanauffangbehälter (a), einen Fluss eines Luft-Späne-Gemischs durch einen Spanauffangbehälter mit einer geöffneten Klappe (b) und einen Fluss eines Luft-Späne-Gemischs durch einen Spanauffangbehälter mit einer geschlossenen Klappe (c),
- Fig. 5: eine Seitenansicht eines Spanauffangbehälters mit einem Fluss eines Luft-Späne-Gemischs bei geschlossener Klappe.

### Beschreibung des Ausführungsbeispiels

Im Wesentlichen gleich bleibende Teile sind in den Figuren grundsätzlich mit den gleichen Bezugszeichen beziffert.

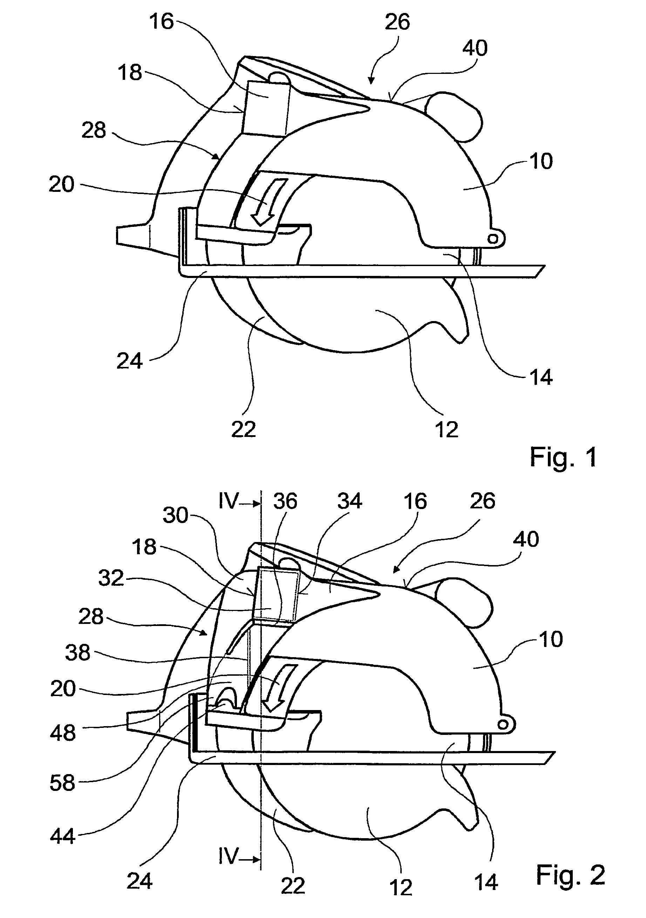

Eine Seitenansicht einer als bevorzugte Handkreissäge ausgebildeten Werkzeugmaschine 26 ist in Figur 1 ohne Spanauffangbehälter dargestellt. Ein Sägeblatt 14 ist von einer beweglichen Pendelschutzhaube 12 und einer unbeweglichen Schutzhaube 10 weitgehend abgedeckt. Die Schutzhaube 10 weist eine Hüllkontur 28 auf. Die Werkzeugmaschine 26 wird auf einer Grundplatte 24 über ein zu bearbeitendes Werkstück geführt. Beim Sägen entstehende Späne werden innerhalb der Schutzhaube 10 in Drehrichtung 20 des Sägeblatts 14 transportiert und verlassen die Schutzhaube 10 durch einen Spanauswurf 16 durch eine Öffnung 18. Der Spanauswurf 16 ist am Umfang der Schutzhaube 10 angeordnet und so ausgeführt, dass alternativ ein Spanauffangbehälter oder ein Absaugschlauch befestigt werden kann; vorzugsweise ist der Spanauswurf 16 rund, mit konischem Verlauf, ausgebildet. Weiterhin ist ein üblicher Spaltkeil 22 vorgesehen, wobei die vorliegende Erfindung auch für Handkreissägen ohne Spaltkeil 22 eingesetzt werden kann.

Figur 2 zeigt eine Seitenansicht der als bevorzugte Handkreissäge ausgebildeten Handwerkzeugmaschine 26 aus Figur 1 mit einem Spanauffangbehälter 30. Bezüglich gleich bleibender Merkmale und Funktionen wird auf die Beschreibung der Figur 1 verwiesen. Der Spanauffangbehälter 30 ist mit einem als Einsteckende ausgebildeten Zuführbereich 32 in eine Öffnung 18 eines Spanauswurfs 16 eingesteckt und bildet eine staubdichte Verbindung. Alternativ, je nach Ausführung, kann der Spanauswurf 16 auch in den Zuführbereich 32 eingesteckt sein. Der Spanauffangbehälter 30 weist ein einhüllendes, längliches Gehäuse 48 auf, das in seiner Form an den vorhandenen Spaltkeil 22 berücksichtigt und sich daher ausgehend von dem Zuführbereich 32 nach unten verjüngt. Der Spanauffangbehälter 30 ist in die Hüllkontur 28 der Schutzhaube 10 integriert. Der Zuführbereich 32 weist eine Öffnung 34 auf, durch die spandurchsetzte Luft in den Spanauffangbehälter 30 gelangen kann. In einem vom Zuführbereich 32 entfernten unteren Bereich des Spanauffangbehälters 30 ist ein separater Spansammelbereich 58 angeordnet. Dieser ist am Boden durch eine Klappe 44 verschlossen, die um eine Drehachse geschwenkt werden kann. Ein separater Luftauslass 36 ist eng benachbart zum Zuführbereich 32 unterhalb von diesem angeordnet. Gestrichelt ist eine Prallwand 38 innerhalb des Spanauffangbehälters 30 eingezeichnet. Die Prallwand 38 verschattet zumindest teilweise den Luftauslass 36 und behindert Späne auf ihrem Weg zum Luftauslass 36, während Luft im Wesentlichen ungehindert zum Luftauslass 36 strömen kann.

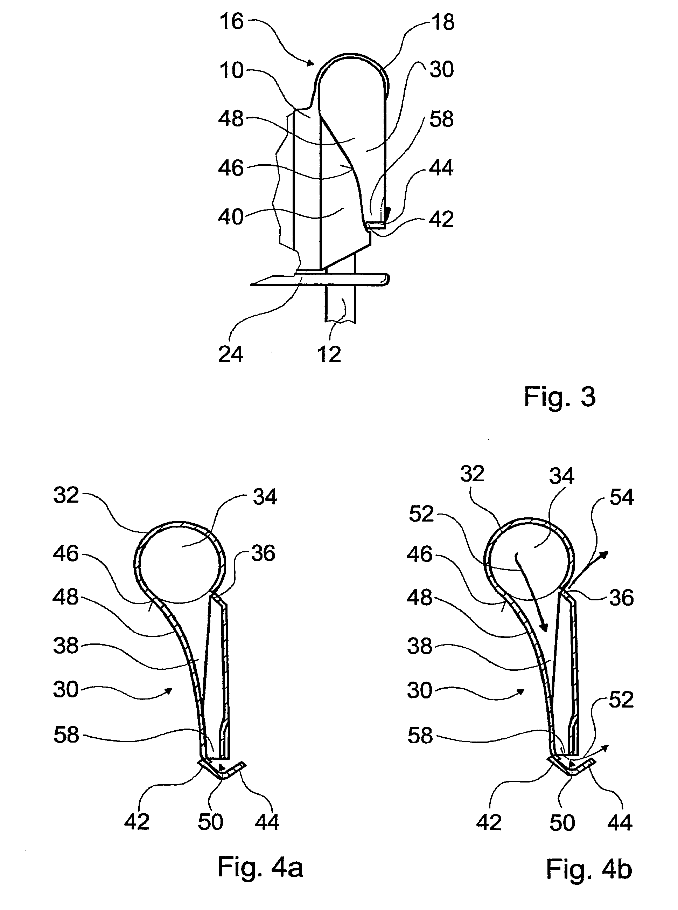

Figur 3 zeigt eine Rückansicht eines an einer Schutzhaube 10 befestigten Spanauffangbehälters 30. Bezüglich gleich bleibender Merkmale und Funktionen wird auf die Beschreibung der vorhergehenden Figuren verwiesen. Der Spanauffangbehälter 30 ist an einem Umfang 40 der Schutzhaube 10 so angeordnet, dass er in eine Hüllkontur 28 der Schutzhaube 10 integriert ist. Erkennbar ist, dass der Spanauffangbehälter 30 in eine Öffnung 18 eines Spanauswurfs 16 mündet, der Bestandteil der Schutzhaube 10 ist. Am unteren Ende des Spanauffangbehälters 30 ist eine Klappe 44 erkennbar, die um einen Drehpunkt 42 schwenkbar ist und die einen Spansammelbereich 58 verschließt.

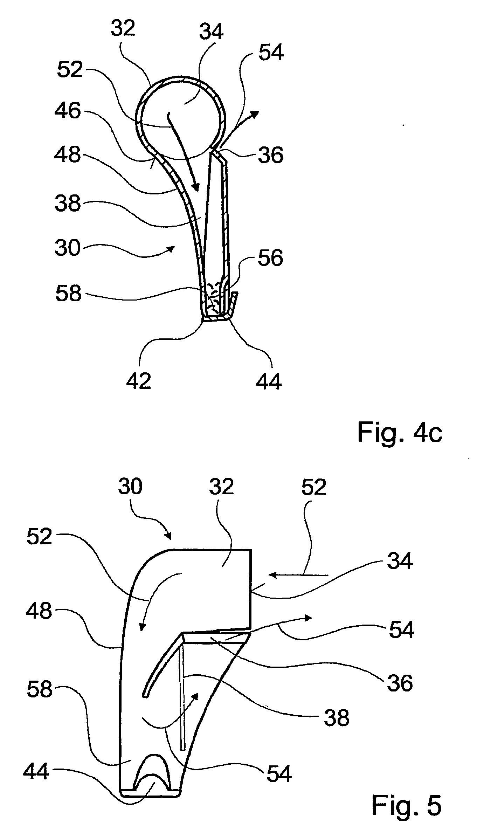

Die Figuren 4 a, b, c zeigen einen Längsschnitt durch einen Spanauffangbehälter 30. Bezüglich gleich bleibender Merkmale und Funktionen wird auf die Beschreibung der vorhergehenden Figuren verwiesen.

Figur 4 a zeigt eine runde Öffnung 34 eines als Einsteckende ausgebildeten Zuführbereichs 32. Umfangseitig ist unterhalb der Öffnung 34 ein Luftauslass 36 angeordnet. Zwischen Öffnung 34 und Luftauslass 36 ist eine Prallwand 38 angeordnet, über die zumindest ein Teil der eintretenden Luft zum Luftauslass 36 gelangen kann. Im unteren Bereich befindet sich ein Spansammelbereich 58 mit einer Öffnung 50, die durch eine um einen Drehpunkt 42 schwenkbare Klappe 44 geschlossen werden kann. Bei geöffneter Klappe 44 können Späne 56, die in den Spansammelbereich 58 gelangen, aus dem Spanauffangbehälter 30 entfernt werden und geschwindigkeitsarm neben der Werkzeugmaschine 26 abgelegt werden. Dabei dient die Klappe 44 im geöffneten Zustand als Spanrutsche und/oder Verlängerung einer Spanrutsche, die beispielsweise durch das Innere des Gehäuses 48 gebildet wird.

Figur 4 b zeigt einen durch Pfeile angedeuteten Fluss eines in die Öffnung 34 eintretenden Luft-Späne-Gemischs 52 durch den Spanauffangbehälter 30 zur geöffneten Klappe 44 im unteren Bereich des Spanauffangbehälters 30. Während ein Teil der Luft mit dem Luft-Späne-Gemisch 52 durch die Öffnung 50 nach außen gelangt, strömt ein Teil der im Wesentlichen von Spänen gereinigten Luft 54 über die Prallwand 38 aus einem dahinter liegenden Luftauslass 36 nach außen. Das verbleibende Luft-Späne-Gemisch 52 wird abgebremst und kann durch die Öffnung 50 geschwindigkeitsarm ins Freie abgeführt werden.

Figur 4 c zeigt einen durch Pfeile angedeuteten Fluss eines Luft-Späne-Gemischs 52 durch den Spanauffangbehälter 30 mit geschlossener Klappe 44. Nunmehr kann keine Luft mehr durch den Spansammelbereich 58 und die Öffnung 50 nach außen strömen. Die Luft 54 wird vollständig durch den Luftauslass 36 abgeleitet und muss dem Weg über die Prallwand 38 folgen, während ein Großteil von Spänen 56 abgebremst wird und sich im Spansammelbereich 58 über der geschlossenen Klappe 44 ansammelt. Eine zur Seite geschwungene Kontur 46 zwischen Zuführbereich 32 und Spansammelbereich 58 ist birnenförmig gestaltet und unterstützt eine zyklonartige Wirkungsweise des Spanauffangbehälters 30.

Figur 5 zeigt eine Seitenansicht eines Spanauffangbehälters 30 mit einem Fluss eines Luft-Späne-Gemischs 52 bei geschlossener Klappe 44. Bezüglich gleich bleibender Merkmale und Funktionen wird auf die Beschreibung der vorhergehenden Figuren verwiesen. Ein Luft-Späne-Gemisch 52 tritt in eine Öffnung 34 eines als Einsteckende ausgebildeten Zuführbereichs 32 ein und wird nach unten in Richtung Spansammelbereich 58 geleitet. Von Spänen gereinigte Luft 54 tritt aus einem benachbart zur Öffnung 34 angeordneten Luftauslass 36 aus, während Späne 56 sich im Spansammelbereich 58 ansammeln. Erkennbar ist eine Richtungsumkehr der Strömung der abströmenden Luft 54 im Vergleich zum eintretenden Luft-Späne-Gemisch 52 sowie der lange Weg, der bis zum Luftauslass 36 zurückgelegt werden muss und der vorteilhaft der Reinigung der Luft 54 von Spänen 56 dient.

## Patentansprüche

1. System aus einem Spanauffangbehälter (30) für eine Späne (56) erzeugende Werkzeugmaschine (26), insbesondere eine handgeführte Werkzeugmaschine (26), mit einem Zuführbereich (32) zum Zuführen eines ein Luft-Späne-Gemisch (52) enthaltenden Luftstroms und zum lösbaren Verbinden mit einem Spanauswurf (16) sowie mit einem einhüllenden Gehäuse (48), das zur Befestigung an einer Schutzhaube (10) vorgesehen ist, wobei in dem Gehäuse (48) ein Luftauslass (36) räumlich getrennt von einem Spansammelbereich (58) für Späne (56) vorgesehen ist, und aus einer den Spanauswurf (16) aufweisenden Schutzhaube (10), wobei die Schutzhaube (10) eine Hüllkontur um ein Werkzeug aufweist und die Späne (56) innerhalb der Schutzhaube (10) in Drehrichtung des Werkzeugs geführt werden, **dadurch gekennzeichnet, dass** der Spanauswurf (16) an einem Umfang der Schutzhaube (10) angeordnet ist und eine Öffnung (18) aufweist, durch die Späne (56) im Betrieb ausgeworfen werden, und dass der Spanauffangbehälter (30) ebenfalls am Umfang der Schutzhaube (10) angeordnet ist.

2. System nach Anspruch 1, **dadurch gekennzeichnet, dass** zwischen dem Luftauslass (36) und dem Spansammelbereich (58) des Spanauffangbehälters (30) eine Trennung durch eine Prallwand (38) vorgesehen ist.

3. System nach Anspruch 1 oder 2, **dadurch gekennzeichnet, dass** zwischen dem Zuführbereich (32) und dem Luftauslass (36) des Spanauffangbehälters (30) Umlenkmittel zur Richtungsumkehr des Luftstroms vorgesehen sind.

4. System nach einem der vorhergehenden Ansprüche, **dadurch gekennzeichnet, dass** das Gehäuse (48) des Spanauffangbehälters (30) im Wesentlichen luftundurchlässig ausgebildet ist.

5. System nach einem der vorhergehenden Ansprüche, **dadurch gekennzeichnet, dass** der Spanauffangbehälter (30) an eine Hüllkontur (28) der Schutzhaube (10) angepasst ist.

6. System nach Anspruch 5, **dadurch gekennzeichnet, dass** der Spanauffangbehälter (30) in die Hüllkontur (28) der Schutzhaube (10) integriert ist.

7. System nach Anspruch 6, **dadurch gekennzeichnet, dass** der Spanauffangbehälter (30) einen mit einem Spanauswurf (16) korrespondierenden Zuführbereich (32) aufweist.

8. System nach einem der vorhergehenden Ansprüche, **dadurch gekennzeichnet, dass** der Spanauffangbehälter (30) eine Klappe (44) zum Entfernen von Spänen (56) aufweist.

9. System nach Anspruch 8, **dadurch gekennzeichnet, dass** bei geöffneter Klappe (44) Späne (56) geschwindigkeitsarm neben der Werkzeugmaschine (26) abgelegt werden.

10. System nach Anspruch 9, **dadurch gekennzeichnet, dass** die Klappe (44) im geöffneten Zustand eine Spanrutsche bildet und/oder als Verlängerung einer Spanrutsche dient.

## Claims

1. System comprising a chip collector (30) for a power tool, in particular a portable power tool (26), producing chips (56), having a feed region (32) for feeding an air flow containing an air/chip mixture (52) and for releasably connecting to a chip discharge (16), and having an enveloping housing (48) which is provided for fastening to a protective hood (10), wherein an air outlet (36) is provided in the housing (48) in such a way as to be spatially separate from a chip-collecting region (58) for chips (56), and comprising a protective hood (10) having the chip discharge (16), wherein the protective hood (10) has an envelope contour about a tool and the chips (56) are directed inside the protective hood (10) in the direction of rotation of the tool, **characterized in that** the chip discharge (16) is arranged at a periphery of the protective hood (10) and has an opening (18) through which chips (56) are discharged during operation, and **in that** the chip collector (30) is likewise arranged at the periphery of the protective hood (10).

2. System according to Claim 1, **characterized in that** a partition is provided between the air outlet (36) and the chip-collecting region (58) of the chip collector (30) by a baffle wall (38).

3. System according to Claim 1 or 2, **characterized in that** deflecting means for reversing the direction of the air flow are provided between the feed region (32) and the air outlet (36) of the chip collector (30).

4. System according to one of the preceding claims, **characterized in that** the housing (48) of the chip collector (30) is designed to be essentially impermeable to air.

5. System according to one of the preceding claims, **characterized in that** the chip collector (30) is adapted to the envelope contour (28) of the protective hood (10).

6. System according to Claim 5, **characterized in that** the chip collector (30) is integrated in the envelope contour (28) of the protective hood (10).

7. System according to Claim 6, **characterized in that** the chip collector (30) has a feed region (32) corresponding to a chip discharge (16).

8. System according to one of the preceding claims, **characterized in that** the chip collector (30) has a flap (44) for removing chips (56).

9. System according to Claim 8, **characterized in that**, when the flap (44) is open, chips (56) are deposited at low speed next to the power tool (26).

10. System according to Claim 9, **characterized in that** the flap (44), in the open state, forms a chip chute and/or serves as an extension of a chip chute.

## Revendications

1. Système composé d'un réceptacle à copeaux (30) pour une machine-outil (26) dégageant des copeaux (56), notamment une machine-outil à main (26), comportant une zone d'alimentation (32) pour fournir une veine d'air contenant un mélange air/copeaux (52) et pour être reliée de manière détachable à un éjecteur de copeaux (16) ainsi qu'un boîtier (48) formant enveloppe, destiné à être fixé à un capot (10), le boîtier (48) comportant une sortie d'air (36) écartée d'une plage collectrice de copeaux (58) pour les copeaux (56) ainsi que d'un capot (10) muni de l'éjecteur de copeaux (16), le capot (10) ayant un contour-enveloppe pour l'outil et les copeaux (56) sont guidés dans le capot (10) dans le sens de rotation de l'outil,
**caractérisé en ce que**
l'éjecteur de copeaux (16) est prévu à la périphérie du capot (10) et comporte une ouverture (18) par laquelle sont éjectés les copeaux (56) pendant le fonctionnement et
le récepteur de copeaux (30) est également prévu à la périphérie du capot (10).

2. Système selon la revendication 1,
**caractérisé par**
une séparation constituée par une paroi brise-jet (38) entre la sortie d'air (36) et la région collectrice de copeaux (58) du réceptacle à copeaux (30).

3. Système selon la revendication 1 ou 2,
**caractérisé par**
des moyens de déviation pour inverser le sens du courant d'air entre la zone d'alimentation (32) et la sortie d'air (36) du réceptacle à copeaux (30).

4. Système selon l'une des revendications précédentes,
**caractérisé en ce que**
le boîtier (48) du réceptacle à copeaux (30) est pratiquement perméable à l'air.

5. Système selon l'une quelconque des revendications précédentes,
**caractérisé en ce que**
le réceptacle à copeaux (30) est adapté au contour de l'enveloppe (28) du capot (10).

6. Système selon la revendication 5,
**caractérisé en ce que**
le réceptacle à copeaux (30) est intégré dans le contour-enveloppe (28) du capot protecteur (10).

7. Système selon la revendication 6,
**caractérisé en ce que**
le réceptacle à copeaux (30) comporte une zone d'alimentation (32) correspondant à un injecteur de copeaux (16).

8. Système selon l'une des revendications précédentes,
**caractérisé en ce que**
le réceptacle à copeaux (30) comporte un volet (44) pour évacuer les copeaux (56).

9. Système selon la revendication 8,
**caractérisé en ce que**
lorsque le volet (44) est ouvert, les copeaux sont déposés à faible vitesse à côté de la machine-outil (26).

10. Système selon la revendication 9,
**caractérisé en ce qu'**
à l'état ouvert, le volet (44) constitue une glissière à copeaux et/ ou sert de prolongement à une glissière à copeaux.
